# EUROPEAN PATENT SPECIFICATION

(11) **EP 0 320 937 B1**
(45) Date of publication and mention of the grant of the patent: **17.07.1996**
(21) Application number: 88121001.7
(22) Date of filing: 15.12.1988
(51) Int. Cl.: G01N 27/26

(54) **Elektrophoresis method**
Verfahren zur Elektrophorese
Méthode pour l'éléctrophorèse

(30) Priority: 18.12.1987 JP 320708/87; 19.04.1988 JP 96067/88
(43) Date of publication of application: 21.06.1989
(73) Proprietor: FUJI PHOTO FILM CO., LTD., Kanagawa 250-01 (JP)
(72) Inventor: Ogawa, Masashi, 3-11-46 Senzui Asaka-shi Saitama-ken (JP); Makino, Yoshihiko, 3-11-46 Senzui Asaka-shi Saitama-ken (JP)
(74) Representative: Kraus, Walter, Dr.

(56) References cited:
- EP-A- 0 234 836
- EP-A- 0 280 567
- EP-A- 0 293 010
- WO-A-87/00635
- US-A- 3 129 158
- US-A- 4 594 064
- PATENT ABSTRACTS OF JAPAN, vol. 9, no. 83 (P-348)[1806], 12th April 1985; & JP-A-59 212 750 (FUJI SHASHIN FILM K.K.) 01-12-1984
- IDEM

## Description

This invention relates to a pulse field electrophoresis method, particularly an electrophoresis medium membrane and an electrophoresis method suitable for electrophoretic separation of high molecular proteins and large DNA molecules by the application of a pulsed electric field. This invention particularly relates to a pulse field electrophoresis method suitable for electrophoretic separation of constituents of living organisms by an improved method of application of a pulsed electric field.

Gel electrophoresis is an important means for separating high molecular materials such as proteins and nucleic acids in the field of genetic technology. With the conventional type of electrophoresis, i.e. continuous electrophoresis, in large-DNA separation and analysis such as chromosome mapping, DNA's having a molecular size (molecular weight) smaller than several tens of kilobase pairs (kbp; bp represents a single base pair, and kbp represents 1,000 base pairs) could be separated, and DNA's having a molecular size larger than several tens of kilobase pairs could not be separated. Because of the extensive amount of research on genetic technology undertaken in recent years, there has arisen an urgent need for quick identification of the base sequences of DNA. A long time has heretofore been required for separating a desired DNA region from chromosomes and large DNA'S, and the efficiency of base sequence determination of a DNA has heretofore been low.

Pulse gradient electrophoresis, wherein intersecting electric fields are applied alternately, was developed by Cantor et al. in 1982 and was disclosed in PCT Patent Publication WO 84/02001. Also, orthogonal-field-alternation gel electrophoresis (OFAGE) and field-inversion gel electrophoresis (FIGE) were disclosed by Olson et al. in "Nucleic Acids Res.", 12, 5647 (1984).

In each electrophoresis method disclosed, DNA'S having different numbers of bases are separated from each other by periodically changing the direction of an electric field, which in turn changes the shapes of the DNA'S.

With the OFAGE method, electrodes are provided and situated at 45° angles with respect to each other, a 1% agarose gel is provided in the space surrounded by the electrodes, the strength of each electric field applied is adjusted to be approximately 10V/cm, the electric fields are alternately applied with a period of several tens of seconds, and electrophoresis is carried out for approximately 15 hours. In this manner, DNA'S up to approximately 400kbp can be separated. The OFAGE method has the drawback that, since the electric fields neither have the same direction nor directions 180° away from each other, the electrophoretic image obtained is distorted, and therefore a large error arises when determining the molecular weight of the DNA molecule.

In the FIGE method, the direction of the electric field is inverted by 180° (i.e., exactly reversed). With the FIGE method, wherein the electric field is accurately applied in one dimension, the separation image is not distorted. However, though pulse conditions are selected in accordance with the molecular weight of the DNA which is to be separated, a predetermined electric field is applied in the forward and reverse directions over the overall gel membrane. Therefore, the shape of the DNA molecule having a molecular weight that falls within a desired range cannot be changed at a high efficiency. As a result, the molecular weight range over which DNA fractionation is possible is narrow. This problem should be solved to increase the speed of this type of genetic analysis and DNA sequence analysis.

Furthermore, WO-A-87/00 635 discloses a method for pulse-field electrophoresis for separating charged macromolecules, wherein the macromolecules to be separated are induced to move through a gel in a predetermined direction away from an origin, under the influence of an electrical potential the polarity of which is intermittently reversed. The polarity of the current intermittently reversed is such that the molecules alternately experience an influence in a forward direction away from the origin and the opposite towards the origin. The net influence towards the origin averaged over a period of time being not greater than 50% of the forward influence.

The voltage employed can be typical of those used in the electrophoresis ranging from 100 to 500 volts and the time interval between the reversing current is from 1/5000 of a second to 90 seconds. However, although WO-A-87/00 635 describes that the polarity of the electrical potential is intermittently reversed, the potential away from the origin is the same value as the potential directed toward the origin. Only the duration of the potentials is varied.

Finally, WO-A-87/01955 discloses a method for gel electrophoresis which employs periodic inversion of the electric field essentially in one dimension, denoted as field-inversion gel electrophoresis (FIGE). This method results in net migration by using a longer time or higher voltage in one direction than in the opposite direction. It permits separation of DNA or protein mixtures in size ranges not accessible to ordinary conventional electrophoresis.

An object of the present invention is to provide an improved pulse field electrophoresis method using an electrophoresis medium membrane composed of an aqueous agarose gel.

Another object of the present invention is to provide a pulse field electrophoresis method wherein the molecular weight range over which fractionation is possible is broadened and separation of large DNA molecules can be achieved.

A further object of the present invention is to provide a pulse field electrophoresis method wherein electrophoretic conditions may be readily adjusted for the molecular weight of a large DNA molecule and high fractionation effects are obtained by short migrating operations.

A still further object of the present invention is to provide an improved pulse field electrophoresis method for pulse-field-inversion electrophoresis.

Another object of the present invention is to provide a pulse field electrophoresis method wherein the range of the molecular weights of the DNA over which fractionation is possible is broadened and separation of large DNA molecules can be achieved.

A further object of the present invention is to provide a pulse field electrophoresis method which enables separation and fractionation of constituents of living organisms such as nucleic acids and proteins in a short migration time.

The present invention provides a pulse field electrophoresis method comprising the steps of applying pulsed potential in such a way that the forward potential applied to the anode side of an electrophoresis medium and the reverse potential applied to the cathode side of the electrophoresis medium are different from each other, and making a duration time of each period of application of potential to the anode different from a duration time of each period of application of potential to the cathode, and further comprising the use of an electrophoresis medium membrane comprising an aqueous agarose gel wherein the gel has a predetermined gradual change in layer thickness and/or concentration along the direction of electrophoresis.

Further developments of the pulse field electrophoresis method according to the present invention are defined in the dependent claims.

The pulse field electrophoresis method in accordance with the present invention enables separation of chromosomal DNA's, chromosome mapping, generation of gene libraries, DNA sequence analysis, RNA sequence analysis, and separation and analysis of proteins, which were impossible or difficult with the conventional technology. The present invention can be applied to, for example, separation of chromosomal DNA's, chromosome mapping, generation of gene libraries, DNA sequence analysis, RNA sequence analysis, and separation and analysis of proteins.

### BRIEF DESCRIPTION OF THE DRAWINGS

Figure 1 is a block diagram showing an example of the potential applying mechanism in the electrophoresis apparatus used for carrying out the pulse field electrophoresis method in accordance with the present invention, and
Figure 2 graphs the values and periods of applied potential pulses of Comparative Example 3.

### DETAILED DESCRIPTION OF THE INVENTION

The use of a first electrophoresis medium membrane in a first embodiment of the pulse field electrophoresis method in accordance with the present invention will hereinbelow be described in further detail.

Agarose which is ordinarily used for separation of DNA's having large molecular weights or for base analysis may be used in the first electrophoresis medium membrane, comprising the aqueous agarose gel having a thickness, which has a predetermined gradual change along the direction of electrophoresis. The agarose may be selected from low-electroendosmotic agarose, medium-electroendosmotic agarose, and high-electroendosmotic agarose. Examples of the agarose are disclosed in Japanese Unexamined Patent Publication No. 55(1980)-5730, U.S. Patent No. 4,290,911, and PCT Patent Publication WO 82/02599. A water-soluble polymer, for example, a nonionic water-soluble polymer such as polyacrylamide or polyethylene glycol, may be added to the aqueous agarose gel. The weight of the water-soluble polymer added is not larger than approximately 20% of the weight agarose, and preferably falls within the range of approximately 0.1% to approximately 10%. Also, other known additives, for example, a surface active agent such as a nonionic surface active agent or an anionic surface active agent, a pH buffer composition, a denaturing agent (or a modifier),, and a polyol compound such as glycerol may be added to the aqueous gel in amounts within the ordinarily used ranges. The concentration of the aqueous gel is adjusted to a substantially constant value, falling within the range of approximately 0.4%(agarose g/water mL) to approximately 4.0%(agarose g/water mL) in accordance with the purpose of use, the molecular weight range of the DNA sample or the like. The range in which the thickness of the agueous gel membrane falls is not limited to a particular range. The thickness of the aqueous gel membrane generally varies within the range of approximately 100µm to approximately l0mm, and preferably within the range of approximately 100µm to approximately 5mm. A graph of the thickness function of the aqueous gel membrane may look like a straight line, an exponential function, a logarithmic function, or a step-like function. Alternatively, a graph of the thickness function of the aqueous gel membrane may look like a straight line, a bent line or a curve expressed by an arbitrary combination of the above-enumerated functions. The change in the thickness of the aqueous gel membrane is generally adjusted so that the thickness of the gel membrane is larger on the sample spotting side (cathode side) than on the opposite side (anode side), but may be adjusted so that the thickness of the gel membrane is smaller on the sample spotting side (cathode side) than on the opposite side (anode side) in accordance with the purpose of use, the molecular weight range of the DNA sample or the like.

In general, a plate or a thin sheet having smooth surfaces and composed of glass, a ceramic material or an electrically insulating organic polymer is generally used as a support for the electrophoresis medium membrane. The plate or the sheet composed of the organic polymer may be, for example, a polyacrylic ester polymer sheet such as a polymethyl acrylate sheet; a polyvinyl chloride sheet; a sheet of a polyester such as polycarbonate of bisphenol A or polyethylene terephthalate, among which the polymethyl acrylate sheet or the polyethylene terephthalate sheet are preferable. The surface of the organic polymer support should preferably be subjected to a known physicochemical surface treatment such as ultraviolet-ray irradiation treatment or glow discharge treatment, and/or provided with a subbing layer such as a cellulose acetate subbing layer or a gelatin subbing layer. The support may be provided only on one side of the gel medium membrane or on both sides thereof. The thickness of the gel membrane may be set by a molding method wherein two glass plates or two polymer plates are positioned facing each other with spacers intervening therebetween at both edges. A thin space having a desired change in thickness is thus produced between the two glass plates or the two polymer plates, and an aqueous agarose solution is introduced into the space, thereby to prepare the gel. The aqueous agarose solution may also be applied onto a support and gelled. In the molding method, a desired gel membrane thickness function can be obtained by changing the thickness of one of the two supports or by changing the distance between the two supports by use of spacers having a desired change in thickness.

Application of an electric field in the first embodiment of the pulse field electrophoresis method in accordance with the present invention will be described hereinbelow. Any known method, for example, the method proposed by Cantor et al. or the OFAGE method may be used to apply the field. In the first embodiment of the pulse field electrophoresis method in accordance with the present invention, electrophoresis is carried out by periodically inverting the direction of the field by 180° (i.e. exactly reversed), instead of applying a d.c. current in a single predetermined direction as in the conventional electrophoresis method. The field is applied pulse-wise. For a gel membrane having a length within the range of approximately 50mm to approximately 50cm along the direction of migration, the voltage (difference in potential) applied across both edges of the gel membrane (across the anode and the cathode) is selected to fall within the range of approximately +10V to approximately +5,000V or from the range of approximately -10V to approximately -5,000V, and preferably within the range of approximately +30V to approximately +2,000V or from the range of approximately -30V to approximately -2,000V. The potential is changed periodically at time intervals selected from the range of approximately 1 millisecond to approximately 1,000 seconds, preferably from the range of approximately 100 milliseconds to approximately 1,000 seconds. For the separation of large DNA'S (having a size within the range of several tens of kilobase pairs to several thousands of kilobase pairs), a voltage within the range of approximately +50V to approximately +1,000V or within the range of approximately -50V to approximately -1,000V is used. The field may be applied in any manner, for example, so that the voltage in the forward direction is higher and the voltage in the reverse direction is lower. Conversely, the voltage in the forward direction may be lower than the voltage in the reverse direction. Basically, the times during which the voltages are applied should be selected so that the forward migration speed is substantially higher than the reverse migration speed. The times during which the pulses are applied are not limited to particular times, and are selected in accordance with the size of the molecule which is to be fractionated. The pulse application times should preferably fall within the range of approximately 1 millisecond to approximately 1,000 seconds, and more preferably within the range of approximately 100 milliseconds to approximately 1,000 seconds. For the separation of large DNA'S, the pulse application time should preferably fall within the range of approximately 1 second to approximately 1,000 seconds. The waveform of the applied pulse field is not limited to a particular one and may, for example, be a square wave, a saw tooth wave, a triangular wave or a sine wave.

Vertical electrophoresis, horizontal electrophoresis and any other known type of electrophoresis may be employed in the present invention.

For detection of large DNA'S such as double-chain DNA'S, after the electrophoresis the electrophoretic image is converted into a visible image by use of a fluorescent agent such as ethidium bromide, the visible image is photographed, and the condition of separation is analyzed. Alternatively, the DNA is transferred (Southern blotting method) to a membrane such as a porous nitrocellulose membrane, hybridization is carried out by use of a radioactive-labeled DNA probe, and then the separation pattern is converted into a visible image by carrying out autoradiography or processing using a computed radiography apparatus provided with an imaging plate. In the case where electrophoretic separation is carried out by use of a sample containing dye- or fluoro chrome-labeled nucleic acid fragments, the separation pattern can be converted into a visible image by use of an apparatus provided with a photoelectric conversion means.

The use of a second electrophoresis medium membrane in a second embodiment of the pulse field electrophoresis method in accordance with the present invention will be described hereinbelow.

Agarose of the same type as that in the first electrophoresis medium membrane
may be used in the second electrophoresis medium membrane, comprising an aqueous agarose gel, the concentration of which has a predetermined gradual change along the direction of electrophoresis.

The concentration of the aqueous gel is adjusted to provide an appropriate concentration function and is selected from the range of approximately 0.4%(agarose g/water mL) to approximately 4.0%(agarose g/water mL) in accordance with the purpose of use, the molecular weight range of the DNA sample or the like. The thickness of the aqueous gel membrane is not limited to a particular value. The thickness of the aqueous gel membrane is generally selected from the range of approximately 100µm to approximately 10mm, and preferably from the range of approximately 100µm to approximately 7mm.

How the concentration of the aqueous gel membrane changes is generally adjusted so that the gel concentration is higher on the sample spotting side (cathode side) than on the opposite side (anode side), and a gradual or step-wise change in the concentration from a higher concentration to a lower concentration may occur along the direction of electrophoretic migration from the edge of the sample spotting portion. However, the opposite of the change in the concentration described above may be employed in accordance with the purpose of use, the molecular weight range of the DNA sample or the like.

Basically , the concentration function of the gel medium should be such that the gel concentration decreases gradually as represented by a slightly bent straight line, a straight line; a part of a curve expressed by a step function, an exponential function, a logarithmic function, a catenary function, a pursuit curve function, a parabola function, a hyperbola function, an ellipse function, or a function of a curve of third degree, by any other curve which changes gradually, or by a combination of a curve with a straight line. The concentration varies with respect to the distance along the direction of migration from the edge of the sample spotting portion, and when necessary, the gel concentration is substantially kept at a predetermined value over a predetermined length. Also, the change in the agarose concentration may be combined with a change in the gel membrane thickness. Also, the shape of the sample spotting portion may be selected from known shapes such as a rectangle, a square, a triangle (shark's teeth shape), and a circle.

In general, the plate or the thin sheet, having smooth surfaces and composed of glass, a ceramic material or an electrically insulating organic polymer as mentioned above, may be used as a support for the electrophoresis medium membrane. The surface of the organic polymer support should preferably be subjected to a known physicochemical surface treatment such as ultraviolet-ray irradiation treatment or glow discharge treatment, and/or provided with a subbing layer such as a cellulose acetate subbing layer or a gelatin subbing layer. The support may be provided only on one side of the gel medium membrane or on both sides thereof. The desired concentration in the gel membrane may be obtained by a molding method wherein two glass plates or two polymer plates are positioned facing each other with spacers intervening therebetween at both edges. A thin space having a desired thickness is thus produced between the two glass plates or the two polymer plates, and an aqueous agarose solution is introduced into the space while changing the agarose concentration, thereby to prepare the gel. The aqueous agarose solution may also be applied onto a support while changing the agaraose concentration and gelled.

In order to vary the agarose gel concentration of the gel medium, it is possible to employ a method comprising the steps of introducing an aqueous agarose solution (solution for gel formation) having a comparatively high concentration in an amount suitable for extending over a predetermined length along the direction of migration into a glass mold composed of two planar glass sheets (a support and a cover sheet) and a spacer plate fixed therebetween, gelling the aqueous agarose solution thus introduced, thereafter introducing an aqueous agarose solution having a comparatively low concentration in an amount suitable for extending over a predetermined length along the direction of migration, and sequentially repeating gelling the aqueous agarose solutions introduced in a manner similar to that described above. It is also possible to employ a method as described in "Tanpakushitsu.Koso No Kisojikkenho" (Basic Experimental Method for Proteins and Enzymes), Horio and Yamashita, Nankodo, 1981, pp. 304-308, and Japanese Unexamined Patent Publication No. 54(1979)-43881, wherein a vessel containing an aqueous agarose solution which contains an agarose in a relatively high concentration and a vessel containing an aqueous agarose solution which contains the agarose in a relatively low concentration are connected with each other by a conduit at positions slightly above the bottom surfaces of the vessels, a solution mixture feed-out conduit is connected to one of the vessels at a position slightly above the bottom surface of the vessel, the solution in the vessel to which the solution mixture feed-out conduit is connected (the vessel containing the high-concentration aqueous agarose solution or the vessel containing the low-concentration aqueous agarose solution) is stirred, and the solution mixture is fed out by a pump provided at an intermediate point of the solution mixture feed-out conduit. Furthermore, it is possible to employ a method as disclosed in Japanese Unexamined Patent Publication No. 62(1987)-167459 using an apparatus provided with two aqueous solution accommodating vessels, containing a high-concentration aqueous agarose solution and a low-concentration aqueous agarose solution, respectively, a single mixing and stirring vessel for receiving, mixing and stirring the two kinds of the aqueous agarose solutions, solution feed conduits for feeding the aqueous agarose solutions from the two aqueous solution accommodating vessels to the mixing and stirring vessel, solution feed flow rate adjusting means provided at intermediate points of the respective solution feed conduits, a control means for controlling the respective solution feed flow rate adjusting means to adjust the solution feed flow rates in accordance with information (signals) corresponding to gradual changes in a predetermined flow rate function, and a casting or application means connected with a leading edge of a single solution feed conduit coming from the mixing and stirring vessel. It is also possible to employ a method as proposed in Japanese Patent Application No. 62(1987)-129924 wherein a high-concentration aqueous agarose solution and a low-concentration aqueous agarose solution are fed out by solution feed-out means (pumps) in a flow rate ratio in accordance with a function which results in a predetermined gradual change, and are mixed with each other in a static mixer.

In the second embodiment of the pulse field electrophoresis method in accordance with the present invention, the field application and electrophoresis operations are carried out in the same manner as mentioned above with reference to the first embodiment of the pulse field electrophoresis method in accordance with the present invention.

A basic embodiment of the pulse field electrophoresis method usable in accordance with the present invention together with an electrophoresis membrane comprising an aqueous agarose gel wherein the gel has a predetermined gradual change in layer thickness and/or concentration along the direction of electrophoresis will be describes hereinbelow.

The basic embodiment of the pulse field electrophoresis method to the used in accordance with the present invention together with an electrophoresis membrane comprising an aqueous agarose gel wherein the gel has a predetermined qradual chanqe in layer thickness and/or concentration along the direction of electrophoresis is characterized by carrying out electrophoresis of a sample by applying an electric field so that the direction of the field is inverted by 180° (i.e., exactly reversed) for a specific period and duration time. The field is applied pulse-wise. The applied voltage is selected from the range of approximately -5,000V to approximately +5,000V. The applied voltage is changed periodically at time intervals selected from the range of approximately 1 millisecond (0.001 second) to approximately 1,000 seconds. For the separation of large DNA's (having a size within the range of several tens of kilobase pairs to several thousands of kilobase pairs), a voltage within the range of approximately -1,000V to approximately +1,000V is used. The field may be applied in any manner, for example, so that the voltage in the forward direction is higher than the voltage in the reverse direction. Conversely, the voltage in the forward direction may be lower than the voltage in the reverse direction. The length of time for which the voltage is applied is selected so that the forward migration speed is substantially higher than the reverse migration speed. The duration of time, i.e. the duration time, for which each pulse is applied is not limited to a particular value, and is selected in accordance with the size of the molecule which is to be fractionated. The duration time of each pulse should preferably be within the range of approximately 1 millisecond to approximately 1,000 seconds. For the separation of large DNA's, the pulse duration time should preferably be within the range of approximately 1 second to approximately 1,000 seconds.

Vertical electrophoresis, horizontal electrophoresis, disk electrophoresis and any other known type of electrophoresis may be employed in the basic embodiment of the pulse field electrophoresis method in accordance with the present invention.

In general, aqueous agarose gel is used as the electrophoresis medium for separation and analysis of large DNA's. The gel concentration is selected from the range of approximately 0.4 w/v%(agarose g/water mL) to approximately 4.0 w/v%(agarose g/water mL). The agarose may be selected from the agaroses enumerated above.

A membrane-shaped (layer-shaped) medium is generally employed as the gel electrophoresis medium. The thickness of the membrane-shaped gel medium (i.e., the gel membrane) is not limited to a particular value, and may be selected from the range of approximately 100µm to approximately 10mm, and preferably from the range of approximately 100µm to approximately 5mm.

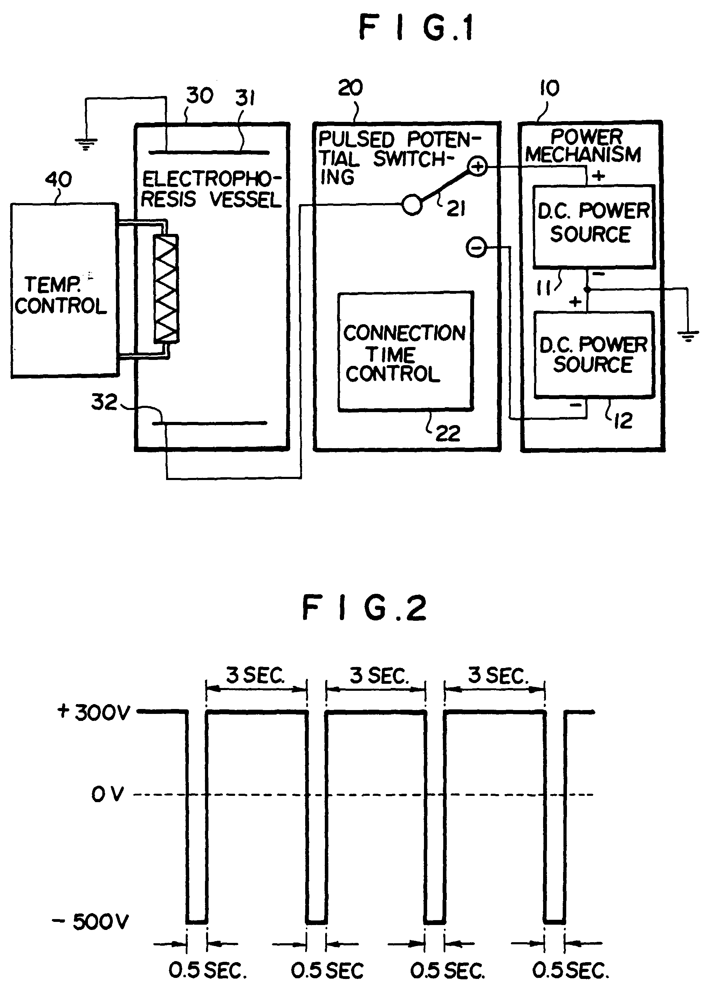

The electrophoresis apparatus for carrying out the basic embodiment of the pulse field electrophoresis method to be used in accordance with the present invention together with an electrophoresis membrane comprising an aqueous agarose gel wherein the gel has a predetermined gradual change in layer thickness and/or concentration along the direction of electrophoresis is characterized by using a potential applying mechanism. With reference to Fig. 1, showing an example of the potential applying mechanism of the electrophoresis apparatus, the electrophoresis apparatus is mainly constituted of a power source mechanism 10 provided with d.c. power sources 11 and 12 capable of being adjusted to different arbitrary voltage levels, a pulsed potential switching and connecting mechanism 20 provided with a switching mechanism 21 and a time control mechanism 22 capable of adjusting the connection duration time to one of two arbitrary values, and an electrophoresis vessel 30 provided with an upper vessel side electrode (electric connection terminal) 31, a lower vessel side electrode (electric connection terminal) 32, and a temperature control mechanism 40. The power source mechanism 10 and the pulsed potential switching and connecting mechanism 20 may be combined into a single mechanism.

The main body of the electrophoresis vessel 30 (electrophoresis apparatus) is the same as the known d.c. applying type or pulse field type of electrophoresis apparatus. The switching mechanism 21 is located between the electrophoresis vessel 30 and the d.c. power sources 11, 12, and is connected with the d.c. power sources 11, 12, capable of being adjusted to different arbitrary potential values, and one of the electrodes (electric connection terminals) of the electrophoresis apparatus, so that pulses of potential are applied for desired time durations to the anode side and the cathode side of the electrophoresis medium by making the potential applied to the anode side different from the potential applied to the cathode side and the duration times of the pulses different from each other. The potential across the anode and the cathode of the electrophoresis vessel 30 is changed by the switching mechanism 21 which connects the upper vessel electrode to the d.c. power source 11 or the d.c. power source 12 for the desired pulse duration time. The switching mechanism 21 may be constituted of a known electromagnetic relay or a known semiconductor relay. Also, in order to adjust for an arbitrary pulse duration time within the range of approximately 1 millisecond to approximately 1,000 seconds, a block mechanism composed of a large-scale integrated circuit semiconductor (LSI) should preferably be employed as a connection time control mechanism. The waveform of the applied pulses is selected from a square wave, a sine wave, a saw tooth wave and other waves. In general, the square wave is employed. The electrophoresis apparatus may also be provided with additional mechanisms such as a known temperature control mechanism (mainly a cooling mechanism), a buffer feeding, holding and discharging mechanism, and an electrophoresis medium fitting and holding mechanism. Figure 2 shows an example of the potential values and periods of the applied pulses.

The present invention will further be illustrated by the following nonlimitative examples.

### Example 1

### [Preparation of the agarose gel membrane in which the thickness of the membrane has a predetermined gradual changealong the direction of electrophoresis]

Aqueous agarose gel membranes having a gel concentration of 1.5% were prepared by applying a solution for gel formation (aqueous agarose solution), which contained a TBE buffer having the composition shown below and agarose dissolved therein, onto a 20cm-square glass plate having smooth surfaces, and keeping the applied solution at a low temperature to gel it. In this manner, two kinds of aqueous agarose gel membranes having different membrane thickness functions, wherein the gel membrane thickness was changed from 2.0mm to 5.0mm (gel membrane 1) and wherein the gel membrane thickness was changed from 0.5mm to 5.0mm (gel membrane 2), were prepared.

### 1) Composition of TBE buffer

| | |
|---|---|
| Tris(hydroxymethyl)aminomethane [Tris] | 103g |
| Boric acid | 55g |
| EDTA·2Na salt | 9.3g |

Made up to 10.0 liters with water.

### 2) Composition of aqueous agarose solution

| | |
|---|---|
| Agarose | 150g |
| TBE buffer shown above | 10 liters |

Thereafter, wells for samples were made in the vicinity of the edge of each aqueous agarose gel membrane on the larger thickness side by the conventional procedure by use of a well type comb having a size of 10mm x 15mm.

### [Performance evaluation of the agarose gel membrane in accordance with an embodiment of the method of the invention]

As DNA samples, TdC DNA (166 kbp), λ DNA (48 kbp) and a degradation product of λ DNA by Hind III were used. Each DNA sample in an amount of 0.02µg was dissolved in 5µl of the TBE buffer having the same constituent concentrations as mentioned above and containing 10% of glycerol and 0.0015% of bromphenol blue, and used for analysis. The samples were applied into the wells by use of a Gilson Pipetman pipette having a cut pipette edge. Prior to pulse application, a d.c. field was applied in one direction for 15 minutes until the sample was introduced into the agarose gel membrane.

Electrophoresis was carried out in accordance with the pulse inversion procedure by connecting the edge of the agarose gel membrane on the larger thickness side to the cathode side and keeping the temperature at 14.0°C. The electrophoresis conditions are shown in Table 1.

After the electrophoresis was finished, the gel membrane was immersed in a dyeing liquid containing 0.5µg of ethidium bromide per lml of the TBE buffer, and the DNA electrophoretic image was converted into a visible image. Thereafter, the visible electrophoretic image was photographed by using a Fuji Instant Black and White Film (trade name: FP-3000B) under irradiation of short-wave ultraviolet light. The distance of migratin of each DNA was investigated on the photograph of the electrophoretic image. The results are shown in Table 1.

### Comparative Example 1

An aqueous agarose gel membrane (gel membrane 3) was prepared in the same manner as in Example 1, except that the thickness of the gel membrane was adjusted to be constant at 2.0mm. A performance evaluation was then carried out in the same manner as in Example 1, and the results shown in Table 1 were obtained.

As is clear from Table 1, with the pulse field electrophoresis method in accordance with the present invention, using the agarose gel membrane having a thickness that varies, the distances of migration of the DNA samples were markedly longer than with the method of Comparative Example 1 using the constant-thickness gel membrane. Thus the electrophoresis medium membrane in the pulse field electrophoresis method in accordance with the present invention have improved effects over the conventional method.

### Example 2

A solution for agarose gel formation was prepared in the same manner as in Example 1, and aqueous gel membranes of the same types as shown in Table 1 were prepared on 250µm-thick colorless polyethylene terephthalate films. Electrophoresis was carried out in the same manner as in Example 1 by use of the agarose gel membranes thus prepared, and the same results as in Example 1 were obtained. The experiments testing the membrane's performance revealed that the same DNA fractionation performance was obtained when the support was made of polyethylene terephthalate film as when the support was made of glass plate.

### Example 3

As aqueous agarose solution was applied onto a colorless, transparent polyethylene terephthalate film having a thickness of 250µm, and was kept at a low temperature to gel the aqueous agarose solution. In this manner, two kinds of aqueous agarose gel membranes with different membrane thickness functions were prepared so that in one case the thickness of the gel membrane changed exponentially from 2.0mm to 5.0mm (gel membrane 4) and in the other case the thickness of the gel membrane changed exponentially from 0.5mm to 5.0mm (gel membrane 5). (In each of the gel membranes 4 and 5, one of the membrane surfaces was straight, and the membrane thickness curved convexly toward the straight surface.) Portions in the vicinity of the thicker edge of each gel membrane were cut off by a sharp cutter knife to make wells for sample spotting.

Electrophoresis was carried out in the same manner as in Example 1 by use of the agarose gel membranes thus prepared. As shown in Table 2, the gel membranes exhibited a wide range of DNA molecular weights over which fractionation was possible and a high resolution.

**Table 1**

| Gel membrane variables | 1 | 2 | 3 |
|---|---|---|---|
| Thickness change | Cathode side: 5.0mm | Cathode side: 5.0mm | Constant at 2.0mm |
| | Anode side: 2.0mm | Anode side: 0.5mm | |
| | Thickness varies as a straight line | | |
| Electrophoresis conditions (pulses) | Forward: 3 seconds | ← | ← |
| | Reverse: 1 second | ← | ← |
| | Applied Voltage: 300V | ← | ← |
| Separation distance | 40mm | 45mm | 27mm |

**Table 2**

| Gel membrane variables | 4 | 5 | 3 |
|---|---|---|---|
| Thickness change | Cathode side: 5.0mm | Cathode side: 5.0mm | Constant at 2.0mm |
| | Anode side: 2.0mm | Anode side: 0.5mm | |
| | Thickness varies as an exponential function curve | | |
| Electrophoresis conditions (pulses) | Forward: 3 seconds | ← | ← |
| | Reverse: 1 second | ← | ← |
| | Applied Voltage: 300V | ← | ← |
| Separation distance | 43mm | 48mm | 27mm |
| Note: In Tables 1 and 2, the separation distance means the distance between the separation bands of T4 (166kbp) and λ (48.5kbp). The mark " ← " means that the value is the same as that to the left. | | | |

### Example 4

### [Preparation of an agarose gel membrane with a varying concentration of agarose]

Two kinds of aqueous agarose gel solutions (solutions for gel formation) having agarose concentrations of 2.0% and 0.5% were prepared by dissolving agarose in a TBE buffer having the composition shown below. The two kinds of aqueous agarose solutions having high and low concentrations were mixed by use of a static mixer in accordance with the method proposed in Japanese Patent Application No. 62(1987)-129924 by gradually changing the flow rate ratio (i.e. by initially adjusting the proportion of the low-concentration aqueous agarose solution to be high and then gradually increasing the proportion of the high-concentration aqueous agarose solution). A linear concentration function from a gel concentration of 0.5% to a gel concentration of 2.0% was obtained over a length of 20cm in the direction of casting or application (gel membrane 6) and a linear concentration function from a gel concentration of 0.5% to a gel concentration of 2.5% was obtained over a length of 20cm in the direction of casting or application (gel membrane 7). The aqueous solution mixture thus obtained was fed at a constant flow rate to a casting or applying head. The.aqueous solution mixture was cast or applied at a constant flow rate onto a 20cm-square glass plate having smooth surfaces so that the gel membrane thickness was uniform at 2.0mm, and kept at a low temperature to gel the mixture. In this manner two kinds of aqueous agarose gel membranes with different concentration functions were prepared.

### 1) Composition of TBE buffer

| | |
|---|---|
| Tris(hydroxymethyl)aminomethane [Tris] | 206g |
| Boric acid | 110g |
| EDTA·2Na salt | 18.6g |

Made up to 20.0 liters with water.

### 2) Composition of high-concentration aqueous agarose solution

| | |
|---|---|
| Agarose | 200g |
| TBE buffer shown above | 10 liters |

### 3) Composition of low-concentration aqueous agarose solution

| | |
|---|---|
| Agarose | 50g |
| TBE buffer shown above | 10 liters |

Thereafter, wells for samples were made in the vicinity of the edge of each aqueous agarose gel membrane on the higher concentration side by the conventional procedure, using a well type comb having a size of 10mm x 15mm.

### [Performance evaluation of the agrose gel membrane with a varying concentration of agarose]

As DNA samples, TdC DNA (166 kbp), λ DNA (48 kbp) and a degradation product of λ DNA by Hind III were used. Each DNA sample in an amount of 0.02µg was dissolved in 5µl of the TBE buffer having the same constituent concentrations as mentioned above and containing 10% of glycerol and 0.0015% of bromphenol blue, and used for analysis. The samples were applied into the wells by use of a Gilson Pipetman pipette having a cut pipette edge. Prior to pulse application, a d.c. field was applied in one direction for 15 minutes until the sample was introduced into the agarose gel membrane.

Electrophoresis was carried out in accordance with the pulse inversion procedure by connecting the edge of the agarose gel membrane on the higher gel concentration side to the cathode side and keeping the temperature at 14.0°C. The electrophoresis conditions are shown in Table 3.

After the electrophoresis was finished, the gel membrane was immersed in a dyeing liquid containing 0.5µg of ethidium bromide per 1ml of the TBE buffer, and the DNA electrophoretic image was converted into a visible image. Thereafter, the visible electrophoretic image was photographed by using Fuji Instant Black and White Film (trade name: FP-3000B) under irradiation of short-wave ultraviolet light. The distance of migration of each DNA was investigated on the photograph of the electrophoretic image. The results are shown in Table 3.

### Comparative Example 2

An aqueous agarose gel membrane (gel membrane 8) was prepared in the same manner as in Example 4, except that the thickness of the gel membrane was adjusted to be constant at 2.0mm and the gel concentration was adjusted to be constant at 1.5%. A performance evaluation was then carried out in the same manner as in Example 4, and the results shown in Table 3 were obtained.

As is clear from Table 3, with the pulse field electrophoresis method in accordance with the present invention, using the agarose gel membrane having a desired concentration function, the distances of migration of the DNA samples were markedly longer than with the method of Comparative Example 1 using the constant-thickness, constant-concentration gel membrane. Thus the electrophoresis medium membrane in the pulse field electrophoresis method in accordance with the present invention have improved effects over the conventional method.

### Example 5

Two kinds of aqueous agarose solutions having high and low concentrations were prepared in the same manner as in Example 4, and aqueous gel membranes of the same types as those shown in Table 3 were prepared on 250µm-thick colorless polyethylene terephthalate films. Electrophoresis was carried out in the same manner as in Example 4 by use of the agarose gel membranes thus prepared, and the same results as in Example 4 were obtained. The experiments testing the membrane's performance revealed that the same DNA fractionation performance was obtained when the support was made of polyethylene terephthalate film as when the support was made of glass plate.

### Example 6

Colorless, transparent polyethylene terephthalate films having a thickness of 250µm were used as the supports, and two kinds of aqueous agarose gel membranes having a constant membrane thickness (2.0mm) but with different concentration functions were prepared on the supports in the same manner as in Example 4, with the gel concentration changing exponentially from 0.5% to 2.0% (gel membrane 9) in one membrane, and the gel concentration changing exponentially from 0.5% to 2.5% (gel membrane 10) in the other membrane. Portions in the vicinity of the edge of each gel membrane on the higher gel concentration side were cut off by a sharp cutter knife to make wells for sample spotting.

Electrophoresis was carried out in the same manner as in Example 4 by use of the agarose gel membranes thus prepared. As shown in Table 4, the gel membranes exhibited a wide range of DNA molecular weights over which fractionation was possible and a high resolution.

**Table 3**

| Gel membrane variables | 6 | 7 | 8 |
|---|---|---|---|
| Concentration change (thickness: 2.0mm) | Cathode side: 2.0% | Cathode side: 2.5% | Constant at 1.5% |
| | Anode side: 0.5% | Anode side: 0.5% | |
| | Concentration varies as a straight line | | |
| Electrophoresis conditions (pulses) | Forward: 3 seconds | ← | ← |
| | Reverse: 1 second | ← | ← |
| | Applied Voltage: 300V | ← | ← |
| Separation distance | 35mm | 40mm | 27mm |

**Table 4**

| Gel membrane variables | 9 | 10 | 8 |
|---|---|---|---|
| Concentration change (thickness: 2.0mm) | Cathode side: 2.0% | Cathode side: 2.5% | Constant at 1.5% |
| | Anode side: 0.5% | Anode side: 0.5% | |
| | Concentration varies as an exponential function curve | | |
| Electrophoresis conditions (pulses) | Forward: 3 seconds | ← | ← |
| | Reverse: 1 second | ← | ← |
| | Applied voltage: 300V | ← | ← |
| Separation distance | 37mm | 42mm | 27mm |
| Note: In Tables 3 and 4, the separation distance means the distance between the separation bands of T4 (166 kbp) and λ (48.5 kbp). The mark " ← " means that the value is the same as that to the left. | | | |

### Comparative Example 3

An agarose solution for gel formation was prepared by adding a TBE buffer, which contained 10.3g of tris(hydroxymethyl)aminomethane, 5.5g of boric acid and 930mg of the EDTA·2Na salt per 1 liter of the buffer solution, into an aqueous agarose solution at approximately 70°C after boiling and dissolution so that the agarose concentration was 1 w/v%

A glass mold provided with a 2mm-thick space between parallel planes was made by securing 2mm-thick spacers to two opposite sides of two square, colorless, transparent glass plates having a thickness of 5mm and a size of 20cm x 20cm. A well type comb having a size of l0mm x l.5mm was provided at one side free of spacers, and the aforesaid solution of gel formation was carefully introduced into the mold and left to stand at room temperature (within the range of approximately 23°C to approximately 25°C). In this manner, an agarose gel membrane having a concentration of 1 w/v% was prepared.

The agarose gel membrane thus prepared was fitted vertically to an electrophoresis apparatus supplied by the Hoefer Company. A TBE buffer having the same concentration as mentioned above was introduced into an upper vessel and a lower vessel of the electrophoresis apparatus. The operations described below were carried out at a temperature of 14°C.

The potential applying mechanism as shown in Figure 1 was used.

As DNA samples, T4dC DNA (166 kbp, λ DNA (48 kbp) and degradation products of λ DNA by Hind III (23.13 kb, 9.42 kb, 6.56 kb, 4.36 kb, 2.32 kb, 2.02 kb, 0.56 kb, 0.13 kb) were used.

Each DNA sample in an amount of 20ng (2 x 10⁻⁸g) was dissolved in 5µl of the TBE buffer having the same concentration as mentioned above and containing 10% of glycerol and 0.0015% of bromphenol blue, and used for analysis. The DNA sample solutions were applied into the wells of the agarose gel membrane by use of a Gilson Pipetman pipette having a cut pipette edge.

Prior to electrophoresis following sample application into the wells, 300V dc was applied for 5 minutes to move the samples into the gel. A pulsed potential cycle (as shown in Figure 2) was composed of 3-second periods during which the upper vessel was kept at 0V and the lower vessel at +300V, followed by 0.5-second periods during which the lower vessel was kept at 500V and the upper vessel at 0V. The application of the pulsed potential was ceased and the electrophoresis was finished at the time bromphenol blue, the dye coexisting with the samples, reached the gel edge. The electrophoresis time was 140 minutes.

### Comparative Example 4

The same procedure as in Comparative Example 3 was carried out, except that a pulsed potential cycle composed of 3-second periods during which the upper vessel was kept at 0V and the lower vessel at +300V, followed by 1-second periods during which the lower vessel was kept at -300V and the upper vessel at 0V (the absolute value of the potentials was the same but the periods of time during which they were applied were different). The electrophoresis time was 170 minutes.

### Comparative Example 5

The same procedure as in Comparative Example 3 was carried out, except that the upper vessel was kept constantly at 0V and the lower vessel at +300. The electrophoresis time was 110 minutes.

### [Performance evaluation]

The gel membrane was taken out of the glass mold after the electrophoresis, and a fluorescent agent was stacked in the DNA by immersng the gel in an aqueous solution containing 0.5µg of ethidium bromide per lml of the TBE buffer. Thereafter, ultraviolet rays were irradiated to the gel membrane, and the fluorescence thus produced was photographed by using Instant Black and White Film FP-300B supplied by Fuji Photo Film Co., Ltd. In this manner, the DNA separation image was converted into a visible image.

The distance between the T4dC DNA band and the λ DNA band in the obtained separation image was measured. The results shown below were obtained.

| | Distance between bands | Electrophoresis time |
|---|---|---|
| Comp. Example 3 | 30mm | 140 minutes |
| Comp. Example 4 | 25mm | 110 minutes |
| Comp. Example 5 | 5mm | 170 minutes |

With the pulse field electrophoresis method wherein the duration of time of the potential an the anode side (forward potential) and the duration time of the potential on the cathode side (reverse potential) are adjusted to different values, the band-to-band distance between the DNA samples having a large molecular weight may be as long as approximately 6 times the band-to-band distance obtained by the electrophoresis method wherein a d.c. potential is applied. Also, with the aforementioned pulse field electrophoresis method the band-to-band distance is longer by approximately 20% and the electrophoresis time is shorter by approximately 20% than with the FIGE pulsed-field electrophoresis method wherein the direction of the applied potential is simply reversed and the periods of application are changed.

## Claims

1. A pulse field electrophoresis method comprising the steps of applying pulsed potential in such a way that the forward potential applied to the anode side of an electrophoresis medium and the reverse potential applied to the cathode side of the electrophoresis medium are different from each other, and making a duration time of each period of application of potential to the anode different from a duration time of each period of application of potential to the cathode, and further comprising the use of an electrophoresis medium membrane comprising an aqueous agarose gel wherein the gel has a predetermined gradual change in layer thickness and/or concentration along the direction of electrophoresis.

2. A pulse field electrophoresis method as defined in claim 1 wherein the potential applied to the anode side and the potential applied to the cathode side are selected from the range of -5000 V to +5000V, and the duration time of each period of application of potential to the anode and the duration time of each period of appliation of potential to the cathode are selected from the range of 1 millisecond to 1000 seconds.

3. A pulse field electrophoresis method as defined in claim 1 or 2, wherein the gel membrane thickness and/or concentration on a sample spotting side, a cathode side, is larger/higher than the gel thickness and/or concentration on the opposite side, the anode side, respectively.

4. A pulse field electrophoresis method as defined in claim 1, 2 or 3, wherein the thickness and/or concentration of the gel varies as a straight line, an exponential function, a logarithm, or a step-like function, or is a straight line, a bent line or a curve expressed by an arbitrary combination of said functions.

5. A pulse field electrophoresis method as defined in any one of claims 1 to 4, wherein the gel is supported on an organic polymer sheet.

6. A pulse field electrophoresis method as defined in claim 5 wherein the organic polymer sheet is a sheet formed of polyethylene terephthalate or polymethyl methacrylate.

7. A pulse field electrophoresis method as defined in any one of claims 1 to 6. wherein the gel is provided with a sample spotting hole.

## Patentansprüche

1. Impulsfeldelektrophorese-Verfahren, umfassend die Schritte des Anwendens eines gepulsten Potentials in einer solchen Art und Weise, daß das an die Anodenseite eines Elektrophoresemediums angelegte Vorwärtspotential und das an die Kathodenseite des Elektrophoresemediums angelegte Rückwärtspotential unterschiedlich voneinander sind, und des Machens einer Zeitdauer von jeder Periode des Anwendens des Potentials an die Anode unterschiedlich von einer Zeitdauer von jeder Periode des Anwendens des Potentials an die Kathode, und weiter umfassend die Verwendung einer Elektrophoresemediummembrane, die ein wäßriges Agarosegel umfaßt, worin das Gel eine vorbestimmte allmähliche Änderung in der Schichtdicke und/oder Konzentration längs der Richtung der Elektrophorese hat.

2. Impulsfeldelektrophorese-Verfahren nach Anspruch 1, worin das an die Anodenseite angelegte Potential und das an die Kathodenseite angelegte Potential aus dem Bereich von -5000 V bis +5000 Volt ausgewählt werden, und die Zeitdauer jeder Periode des Anwendens des Potentials an die Anode und die Zeitdauer von jeder Periode des Anwendens des Potentials an die Kathode aus dem Bereich von 1 Millisekunde bis 1000 Sekunden ausgewählt werden.

3. Impulsfeldelektrophorese-Verfahren nach Anspruch 1 oder 2, worin die Gelmembrandicke und/oder -konzentration auf der Probentüpfelungsseite, einer Kathodenseite, jeweils größer/höher als die Geldicke und/oder -konzentration auf der entgegengesetzten Seite, der Anodenseite, ist.

4. Impulsfeldelektrophorese-Verfahren nach Anspruch 1, 2 oder 3, worin sich die Dicke und/oder Konzentration des Gels als eine gerade Linie, eine Exponentialfunktion, ein Logarithmus oder eine stufenartige Funktion ändert, oder eine gerade Linie, eine gebogene Linie oder eine durch eine willkürliche Kombination der genannten Funktionen ausgedrückte Kurve ist.

5. Impulsfeldelektrophorese-verfahren nach irgendeinem der Ansprüche 1 bis 4, worin das Gel auf einer organischen Polymerfolie bzw. einer organischen Polymerdünnplatte abgestützt ist.

6. Impulsfeldelektrophorese-verfahren nach Anspruch 5, worin die organische Polymerfolie bzw. die organische Polymerdünnplatte eine Folie bzw. eine Dünnplatte ist, die aus Polyethylenterephthalat oder Polymethylmethacrylat ausgebildet ist.

7. Impulsfeldelektrophorese-Verfahren nach irgendeinem der Ansprüche 1 bis 6, worin das Gel mit einer Probentüpfelungsöffnung versehen ist.

## Revendications

1. Procédé d'électrophorèse en champ pulsé comprenant les étapes consistant à appliquer un potentiel pulsé, de telle manière que le potentiel direct appliqué au côté de l'anode d'un milieu d'électrophorèse et le potentiel inverse appliqué au côté de la cathode du milieu d'électrophorèse sont différents l'un de l'autre, et rendant une durée de chaque période d'application de potentiel à l'anode différente d'une durée de chaque période d'application de potentiel à la cathode, et comprenant en outre l'utilisation d'une membrane de milieu d'électrophorèse comprenant un gel aqueux d'agarose, dans lequel le gel présente une modification progressive prédéterminée en épaisseur de couche et/ou en concentration le long de la direction d'électrophorèse.

2. Procédé d'électrophorèse en champ pulsé selon la revendication 1, dans lequel le potentiel appliqué au côté de l'anode et le potentiel appliqué au côté de la cathode sont choisis dans l'intervalle de -5000 V à +5000 V et la durée de chaque période d'application de potentiel à l'anode et la durée de chaque période d'application de potentiel à la cathode sont choisies dans l'intervalle de 1 milliseconde à 1000 secondes.

3. Procédé d'électrophorèse en champ pulsé selon la revendication 1 ou 2, dans lequel l'épaisseur et/ou la concentration de la membrane de gel sur un côté de dépôt en taches de l'échantillon, un côté de la cathode, est supérieure/plus élevée que l'épaisseur et/ou la concentration de gel sur le côté opposé, respectivement le côté de l'anode .

4. Procédé d'électrophorèse en champ pulsé selon la revendication 1, 2 ou 3, dans lequel l'épaisseur et/ou la concentration du gel varie comme une ligne droite, une fonction exponentielle, un logarithme, ou une fonction échelon, ou est une ligne droite, une ligne courbée ou une courbe exprimée par une combinaison arbitraire desdites fonctions.

5. Procédé d'électrophorèse en champ pulsé selon l'une quelconque des revendications 1 à 4, dans lequel le gel est supporté sur une feuille polymère organique.

6. Procédé d'électrophorèse en champ pulsé selon la revendication 5, dans lequel la feuille polymère organique est une feuille constituée de poly(téréphtalate d'éthylène) ou de poly(méthacrylate de méthyle).

7. Procédé d'électrophorèse en champ pulsé selon l'une quelconque des revendications 1 à 6, dans lequel le gel est muni d'un trou de dépôt en taches de l'échantillon.
